# EUROPEAN PATENT APPLICATION

(11) **EP 4 815 185 A1**
(43) Date of publication of application: **30.09.2026**
(21) Application number: 24932989.7
(22) Date of filing: 15.08.2024
(51) Int. Cl.: H01M 50/593

(54) **BATTERY CELL, BATTERY, AND ELECTRICAL DEVICE**

(30) Priority: 27.03.2024 CN 202410361408
(71) Applicant: Contemporary Amperex Technology Co., Limited, Ningde, Fujian 352100 (CN)
(72) Inventor: LIN, Denghua, Ningde, Fujian 352100 (CN); YANG, Xiao, Ningde, Fujian 352100 (CN); LUO, Yan, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2024/112418
(87) International publication number: WO 2025/200240

(57) **Abstract**

Embodiments of the present application disclose a battery cell, a battery, and an electrical device. The battery cell comprises: a first wall, the first wall being provided with a pressure relief mechanism; an insulating member, the insulating member being used for covering a partial area of the first wall, the insulating member being provided with a clearance opening, and the clearance opening being used for providing clearance for the pressure relief mechanism. The battery cell, the battery, and the electrical device of the embodiments of the present application can improve battery reliability.

## Description

### CROSS-REFERENCE TO RELATED APPLICATION

The present application claims priority to Chinese Patent Application No. 202410361408.5, filed on March 27, 2024 and entitled "BATTERY CELL, BATTERY, AND ELECTRIC DEVICE", the content of which is incorporated herein by reference in its entirety.

### TECHNICAL FIELD

The present application relates to the field of batteries, and in particular, to a battery cell, a battery, and an electric device.

### BACKGROUND

Energy conservation and emission reduction are the key to the sustainable development of the automobile industry. In this case, electric vehicles have become an important part of the sustainable development of the automobile industry due to their energy conservation and environmental protection advantages. For electric vehicles, the battery technology is an important factor in their development. In the rapid development of battery technology, how to improve the safety performance of batteries is an urgent technical problem to be solved in the battery technology.

### SUMMARY

Embodiments of the present application provide a battery cell, a battery, and an electric device, which can improve the reliability of the battery.

In a first aspect, a battery cell is provided. The battery cell includes: a first wall, the first wall being provided with a pressure relief mechanism; and an insulating member, the insulating member being configured to cover a partial region of the first wall, the insulating member being provided with a clearance opening, and the clearance opening being configured to provide clearance for the pressure relief mechanism.

Therefore, according to the battery cell provided in the embodiments of the present application, the insulating member can cover a partial region of the first wall, thereby reducing the risk of insulation failure of the battery cell and improving the reliability and service life of the battery. Further, the insulating member is provided with a clearance opening, and the clearance opening is configured to provide clearance for the pressure relief mechanism of the first wall; that is, the insulating member does not completely cover the pressure relief mechanism of the first wall, so as to reduce the impact of the insulating member on the pressure relief mechanism. As a result, in the case of thermal runaway of the battery cell, the pressure relief mechanism can be promptly actuated, such that emissions are rapidly discharged, thereby reducing hindrance of the insulating member to the pressure relief mechanism, improving the reliability of the battery cell, and reducing the risk of thermal propagation in the battery.

In some embodiments, the insulating member is configured to cover a plurality of walls of the battery cell to improve the reliability of the battery cell and reduce the risk of insulation failure.

In some embodiments, an orthographic projection of the clearance opening onto the first wall completely covers the pressure relief mechanism, such that the clearance opening does not obstruct the pressure relief mechanism at all, thereby reducing the impact of the insulating member on the pressure relief mechanism, and the pressure relief mechanism can be promptly actuated when thermal runaway occurs in the battery cell, so as to promptly discharge emissions, thereby improving the reliability of the battery cell.

In some embodiments, a minimum distance between a boundary line of the orthographic projection of the clearance opening onto the first wall and the pressure relief mechanism is greater than or equal to 0.5 mm. In view of manufacturing tolerances during processing, the distance between the boundary line of the orthographic projection of the clearance opening onto the first wall and the pressure relief mechanism should not be excessively small, so as to enable the clearance opening not to obstruct the pressure relief mechanism at all, thereby reducing hindrance of the insulating member to the pressure relief mechanism.

In some embodiments, the first wall is connected to an adjacent second wall via a first fillet, and the insulating member covers the first fillet; that is, the edge of the insulating member is not located in the region where the first fillet is located, so as to reduce the risk of insulation failure caused by warping of the insulating member at the position of the first fillet.

In some embodiments, a distance by which a boundary line of the insulating member extends beyond a connection line between the second wall and the first fillet is greater than or equal to 2 mm, so as to improve the stability of the boundary line of the insulating member and reduce the risk of warping of the edge of the insulating member, thereby reducing the risk of insulation failure.

In some embodiments, the battery cell further includes an electrode terminal. The electrode terminal is disposed on a third wall of the battery cell, and the third wall is different from the first wall. By disposing the electrode terminal and the pressure relief mechanism on different walls of the battery cell, when thermal runaway occurs in the battery cell, the impact of emissions discharged via the pressure relief mechanism on the electrode terminal can be reduced, and the risk of short circuits can be reduced, thereby reducing the risk of thermal propagation.

In some embodiments, the insulating member is configured to cover all regions of the first wall other than the pressure relief mechanism. The insulating member typically does not cover the region where the electrode terminal is located, so as to reduce the impact of the insulating member on the electrode terminal and improve the stability of the electrical connection between the electrode terminal and other components. Therefore, in the case where the first wall is not provided with the electrode terminal, the insulating member may typically cover all regions of the first wall other than the pressure relief mechanism to facilitate processing.

In some embodiments, the battery cell includes: a shell body, the shell body being of a hollow structure with an opening, and the first wall being a side wall of the shell body; and a cover plate, the cover plate being configured to cover the opening of the shell body, and the cover plate being a wall with a largest area of the battery cell, so as to facilitate processing and assembly.

In a second aspect, a battery is provided. The battery includes a plurality of battery cells, and the battery cell is the battery cell according to the first aspect or according to any one of the embodiments of the first aspect.

In some embodiments, the battery further includes a separating component. The separating component is attached to the first wall. The separating component is provided with a pressure relief region opposite to the pressure relief mechanism, and the pressure relief region is configured to discharge emissions of the battery cell discharged via the pressure relief mechanism. In the case where the battery cell is actuated, the emissions discharged via the pressure relief mechanism can be discharged by means of the pressure relief region. As a result, the impact on the pressure relief mechanism can be reduced; the pressure inside the battery cell, where thermal runaway occurs, can be promptly relieved, and the temperature therein can be promptly reduced, thereby reducing the risk of thermal propagation.

In some embodiments, an orthographic projection of the clearance opening onto the separating component is located within the pressure relief region, so as to reduce the risk of insulation failure of the pressure relief region, thereby improving the reliability of the battery cell.

In some embodiments, the pressure relief region is a through hole. In one aspect, the through hole is easy to process, and in another aspect, the emissions discharged via the pressure relief mechanism can be released promptly and rapidly.

In some embodiments, the separating component is a thermal management component, and the thermal management component is configured to regulate a temperature of the battery cell; or the battery includes a case, the case is configured to accommodate a plurality of battery cells, and the separating component is a wall of the case.

In a third aspect, an electric device is provided. The electric device includes a battery. The battery is the battery according to the second aspect or according to any one of the embodiments of the second aspect, and the battery is configured to supply power to the electric device.

In some embodiments, the electric device is a vehicle, a ship, or a spacecraft.

### BRIEF DESCRIPTION OF THE DRAWINGS

FIG. 1 is a schematic diagram of a vehicle according to one embodiment of the present application;
FIG. 2 is a schematic diagram of an exploded structure of a battery according to one embodiment of the present application;
FIG. 3 is a schematic structural diagram of a battery cell according to one embodiment of the present application;
FIG. 4 is another schematic structural diagram of a battery cell according to one embodiment of the present application;
FIG. 5 is a schematic exploded view of a partial structure of a battery cell according to one embodiment of the present application;
FIG. 6 is a partial schematic top view of a battery cell according to one embodiment of the present application;
FIG. 7 is a schematic cross-sectional view of a battery cell according to one embodiment of the present application;
FIG. 8 is a partial schematic cross-sectional view of a battery cell according to one embodiment of the present application;
FIG. 9 is another partial schematic cross-sectional view of a battery cell according to one embodiment of the present application;
FIG. 10 is a schematic side view of a battery cell according to one embodiment of the present application;
FIG. 11 is a schematic structural diagram of a battery cell according to another embodiment of the present application;
FIG. 12 is a schematic structural diagram of a battery cell and a separating component according to one embodiment of the present application;
FIG. 13 is another schematic structural diagram of a battery cell and a separating component according to one embodiment of the present application; and
FIG. 14 is a schematic side view of a side of a separating component away from a battery cell according to one embodiment of the present application.

The drawings are not drawn to scale.

### DETAILED DESCRIPTION

The technical solutions in embodiments of the present application will be described below with reference to the drawings.

To make the objectives, technical solutions, and advantages of the embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the described embodiments of the present application can be combined with other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood based on specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary and should not be construed as limiting the present application in any way.

The term "plurality of" used in the present application refers to two or more (including two). Similarly, "plurality of groups" refers to two or more (including two) groups, and "plurality of pieces" refers to two or more (including two) pieces.

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

In some implementations, the battery cell in the embodiments of the present application may be a metal battery. Specifically, the metal battery may include a lithium metal secondary battery, a sodium metal battery, a magnesium metal battery, and the like. This is not limited in the embodiments of the present application.

The battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on either or both of the two opposite surfaces of the positive electrode current collector.

As an example, a metal foil, a foam metal, or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in a combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, the negative electrode may be a negative electrode plate, and the negative electrode plate may include a negative electrode current collector and a negative electrode active material disposed on at least one surface of the negative electrode current collector.

As an example, the negative electrode current collector is provided with two surfaces opposite to each other in its own thickness direction, and the negative electrode active material is disposed on either or both of the two opposite surfaces of the negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The foam metal may be foam nickel, foam copper, foam aluminum, foam alloy, foam carbon, or the like. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like.

In some embodiments, the electrode assembly further includes a separator. The separator is disposed between the positive electrode and the negative electrode.

In some embodiments, the separator is a separation film. The present application does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene fluoride, and ceramic.

In some embodiments, the separator is a solid-state electrolyte. The solid-state electrolyte is disposed between the positive electrode and the negative electrode, serving both to transport ions and to isolate the positive electrode from the negative electrode.

In some embodiments, the battery cell further includes an electrolyte that serves to conduct ions between the positive electrode and the negative electrode. The present application does not specifically limit the type of the electrolyte, which may be selected based on requirements. The electrolyte may be liquid-state, gel-state, or solid-state.

In some embodiments, the electrode assembly is of a wound structure. The positive electrode plate and the negative electrode plate are wound to form a wound structure.

In some embodiments, the electrode assembly is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, a plurality of separators may be provided and are separately disposed between any adjacent positive electrode plates or negative electrode plates.

As an example, the separators may be provided continuously and are disposed between any adjacent positive electrode plates or negative electrode plates by means of folding or winding.

In some embodiments, the shape of the electrode assembly may be cylindrical, flat, polygonal prismatic, or the like.

In some embodiments, the electrode assembly is provided with tabs that can conduct current out from the electrode assembly. The tabs include a positive electrode tab and a negative electrode tab.

In some embodiments, the battery cell may include a shell. The shell is configured to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like. The shell includes a shell body and a cover plate.

As an example, the battery cell may be a cylindrical battery cell, a prismatic battery cell, a pouch battery cell, or a battery cell of other shapes. The prismatic battery cell includes a square-shell battery cell, a blade-shaped battery cell, and a polygonal prismatic battery, and the polygonal prismatic battery is, for example, a hexagonal prismatic battery. This is not particularly limited in the present application.

The battery mentioned in the embodiments of the present application may include one or more battery cells to provide a single physical module with a higher voltage and capacity. When a plurality of battery cells are provided, the plurality of battery cells are connected in series, in parallel, or in series-parallel by a busbar component.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossbeam and a longitudinal beam of the vehicle.

Battery technology advancement requires consideration of various design factors at the same time, such as energy density, cycle life, discharge capacity, charging and discharging rate, and other performance parameters. In addition, the safety of the battery also needs to be considered. A plurality of battery cells are disposed inside the case of the battery, and the shell of the battery cell is typically an aluminum shell or a steel shell. When the plurality of battery cells are assembled together, the insulation among the plurality of battery cells and between the battery cells and other components within the case should be considered, so as to reduce the risk of short circuits.

Therefore, the embodiments of the present application provide a battery cell, a battery, and an electric device, which can solve the problems described above. The battery cell according to the embodiments of the present application includes a first wall. The first wall is provided with a pressure relief mechanism. The battery cell further includes an insulating member, and the insulating member can be configured to cover a partial region of the first wall, so as to reduce the risk of insulation failure of the battery cell and improve the reliability and service life of the battery. Further, the insulating member is provided with a clearance opening, and the clearance opening is configured to provide clearance for the pressure relief mechanism of the first wall; that is, the insulating member does not completely cover the pressure relief mechanism of the first wall, so as to reduce the impact of the insulating member on the pressure relief mechanism. As a result, in the case of thermal runaway of the battery cell, the pressure relief mechanism can be promptly actuated, such that emissions are rapidly discharged, thereby reducing hindrance of the insulating member to the pressure relief mechanism, improving the reliability of the battery cell, and reducing the risk of thermal propagation in the battery.

For ease of description, the following embodiments will be described by taking a vehicle as an example of the electric device.

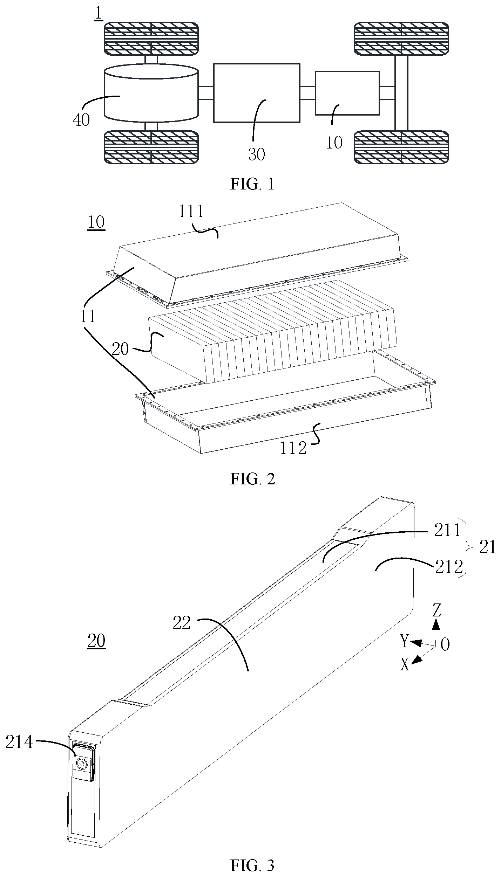

For example, FIG. 1 is a schematic structural diagram of a vehicle 1 according to one embodiment of the present application. The vehicle 1 may be a fuel vehicle, a gas vehicle, or a new energy vehicle. The new energy vehicle may be a pure electric vehicle, a hybrid vehicle, or an extended-range vehicle. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may serve as an operation power source for the vehicle 1 and is configured in a circuit system of the vehicle 1, for example, for the startup and navigation of the vehicle 1 and for the working power demand during operation. In another embodiment of the present application, the battery 10 may not only serve as an operation power source for the vehicle 1, but also serve as a driving power source for the vehicle 1 to, replacing or partially replacing fuel or natural gas, provide driving power for the vehicle 1.

To meet different power usage requirements, the battery may include a plurality of battery cells. The plurality of battery cells may be connected in series, in parallel, or in series-parallel. The series-parallel connection refers to a mixture of series connection and parallel connection. The battery may also be referred to as a battery pack. For example, the plurality of battery cells may be first connected in series, in parallel, or in series-parallel to form a battery module, and then a plurality of battery modules are connected in series, in parallel, or in series-parallel to form a battery. That is, the plurality of battery cells may be directly assembled into a battery, or may be first assembled into battery modules, which are then assembled into a battery.

For example, FIG. 2 shows a schematic structural diagram of a battery 10 according to one embodiment of the present application. The battery 10 may include a plurality of battery cells 20. The battery 10 may further include a case 11, and the interior of the case 11 is of a hollow structure. The plurality of battery cells 20 are accommodated in the case 11. FIG. 2 shows a possible implementation of the case 11 according to the embodiments of the present application. As shown in FIG. 2, the case 11 may include two parts, herein referred to as a first part 111 and a second part 112, and the first part 111 and the second part 112 are snap-fitted together. The shapes of the first part 111 and the second part 112 may be determined based on the shape of the combination of a plurality of battery cells 20, and at least one of the first part 111 and the second part 112 has one opening. For example, as shown in FIG. 2, the first part 111 and the second part 112 may each be a hollow rectangular parallelepiped and each have only one open face. The opening of the first part 111 and the opening of the second part 112 are disposed opposite to each other, and the first part 111 and the second part 112 are snap-fitted together to form the case 11 with an enclosed chamber.

For another example, unlike that shown in FIG. 2, only one of the first part 111 and the second part 112 may be a hollow rectangular parallelepiped with an opening, while the other is plate-shaped so as to cover the opening. For example, in an example where the second part 112 is a hollow rectangular parallelepiped and only one face is the open face, and the first part 111 is plate-shaped, the first part 111 covers the opening of the second part 112 to form the case 11 with an enclosed chamber, which can be used to accommodate a plurality of battery cells 20. The plurality of battery cells 20, after being connected in parallel, in series, or in series-parallel, are disposed inside the case 11 formed after the first part 111 and the second part 112 are snap-fitted together.

In some embodiments, the battery 10 may further include other structures, which are not described in detail herein. For example, the battery 10 may further include a busbar component, and the busbar component is configured to achieve electrical connection among the plurality of battery cells 20, such as in parallel, in series, or in series-parallel connection. Specifically, the busbar component may achieve electrical connection among the battery cells 20 by connecting to electrode terminals of the battery cells 20. Further, the busbar component may be fixed to the electrode terminals of the battery cells 20 by welding. The electric energy of the plurality of battery cells 20 can be further conducted through a conductive mechanism passing through the case 11.

Based on different power requirements, the number of the battery cells 20 in the battery 10 may be set to any numerical value. The plurality of battery cells 20 may be connected in series, in parallel, or in series-parallel to achieve a higher capacity or power. Since each battery 10 may include a large number of the battery cells 20, the battery cells 20 may be arranged in groups for ease of mounting, with each group of the battery cells 20 forming a battery module. The number of the battery cells 20 included in the battery module is not limited and may be set according to requirements. In addition, in order to improve the space occupation of the battery cells 20 in the battery 10, the mounting orientation of the battery cells 20 may be appropriately configured based on the shapes of the plurality of battery cells 20. In addition, the mounting orientations of different battery cells 20 in the battery 10 may be the same or different, which is not limited in the embodiments of the present application.

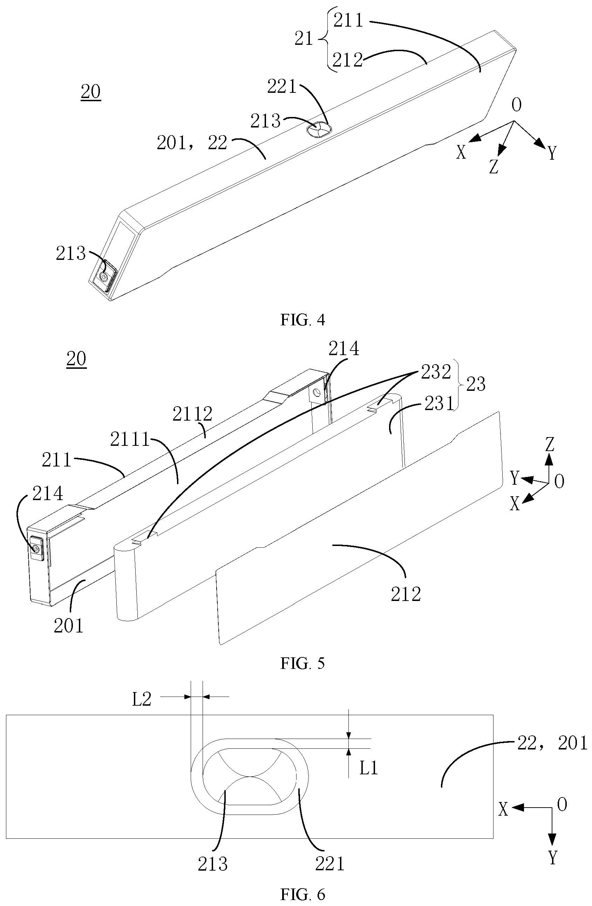

FIGs. 3 and 4 show schematic structural diagrams of a battery cell 20 from different angles according to the embodiments of the present application, respectively. For example, FIGs. 3 and 4 may be any one of the battery cells 20 included in the battery 10 shown in FIG. 2.

In the embodiments of the present application, as shown in FIGs. 3 and 4, the battery cell 20 according to the embodiments of the present application includes a first wall 201. The first wall 201 is provided with a pressure relief mechanism 213. The battery cell 20 further includes an insulating member 22. The insulating member 22 is configured to cover a partial region of the first wall 201. The insulating member 22 is provided with a clearance opening 221, and the clearance opening 221 is configured to provide clearance for the pressure relief mechanism 213.

It should be understood that the battery cell 20 according to the embodiments of the present application may be of a polyhedral structure of any shape; that is, the battery cell 20 may include a plurality of walls. The first wall 201 is any one of the walls of the battery cell 20; that is, the pressure relief mechanism 213 may be located on any one of the walls of the battery cell 20.

The first wall 201 according to the embodiments of the present application is provided with the pressure relief mechanism 213. The pressure relief mechanism 213 refers to an element or a component that is actuated to relieve the internal pressure or reduce the internal temperature of the battery cell 20 when the internal pressure or temperature reaches a preset threshold. The designed threshold varies based on different design requirements. The threshold may depend on the material of one or more of the positive electrode plate, the negative electrode plate, an electrolytic solution, and a separation film in the battery cell 20.

The term "actuate" mentioned in the present application means that the pressure relief mechanism 213 generates an action or is activated to a certain state to allow the relief of the internal pressure and reduction of the temperature of the battery cell 20. The actions generated by the pressure relief mechanism 213 may include, but are not limited to: crack, breakage, tearing, or opening of at least a part of the pressure relief mechanism 213. When the pressure relief mechanism 213 is actuated, high-temperature and high-pressure substances inside the battery cell 20 are discharged outward from the actuated part as emissions. In this way, the battery cell 20 can undergo pressure relief and temperature reduction under the condition of controllable pressure or temperature, thereby preventing potentially more severe accidents.

The emissions from the battery cell 20 mentioned in the present application include, but are not limited to: electrolytic solution, dissolved or split positive and negative electrode plates, fragments of a separation film, high-temperature and high-pressure gas generated by reaction, flame, and the like.

The insulating member 22 according to the embodiments of the present application is configured to cover a partial region of the first wall 201 of the battery cell 20. The clearance opening 221 of the insulating member 22 is configured to provide clearance for the pressure relief mechanism 213; that is, the insulating member 22 does not completely cover the pressure relief mechanism 213. In one aspect, the insulating member 22 can reduce the risk of insulation failure of the battery cell 20, thereby improving the reliability and service life of the battery 10. In another aspect, the clearance opening 221 can provide clearance for the pressure relief mechanism 213, such that the insulating member 22 does not completely cover the pressure relief mechanism 213, thereby reducing the impact of the insulating member 22 on the pressure relief mechanism 213. As a result, in the case of thermal runaway of the battery cell 20, the pressure relief mechanism 213 can be promptly actuated, such that emissions are rapidly discharged to relive the pressure and reduce the temperature inside the battery cell 20, thereby reducing hindrance of the insulating member 22 to the actuation process of the pressure relief mechanism 213, improving the reliability of the battery cell 20, and reducing the risk of thermal propagation of the plurality of battery cells 20 in the battery 10.

FIG. 5 shows a schematic exploded view of a partial structure of a battery cell 20 according to the embodiments of the present application. For example, FIG. 5 may be a schematic exploded view of a partial structure of the battery cell 20 shown in FIGs. 3 and 4, and the insulating member 22 is not shown in FIG. 5. As shown in FIGs. 3 to 5, the battery cell 20 according to the embodiments of the present application may further include a shell 21. The interior of the shell 21 is configured to accommodate an electrode assembly 23. The shell 21 may be of a hollow polyhedral structure, and the hollow structure may be configured to accommodate the electrode assembly 23.

It should be understood that the electrode assembly 23 according to the embodiments of the present application is a component in the battery cell 20 where electrochemical reactions occur, and one or more electrode assemblies 23 may be provided in the battery cell 20 based on actual use requirements. For any one electrode assembly 23, the electrode assembly 23 may include a tab 232 and an electrode plate main body part 231. Specifically, as shown in FIGs. 3 to 5, the electrode assembly 23 may include at least two tabs 232. The at least two tabs 232 may include at least one positive electrode tab and at least one negative electrode tab. The positive electrode tab may be formed by stacking portions of the positive electrode plate that are not coated with the positive electrode active substance layer, and the electrode plate main body part 231 may be formed by winding or stacking portions of the positive electrode plate that are coated with the positive electrode active substance layer. The negative electrode tab may be formed by stacking portions of the negative electrode plate that are not coated with the negative electrode active substance layer, and the electrode plate main body part 231 may be formed by winding or stacking portions of the negative electrode plate that are coated with the negative electrode active substance layer.

The plurality of tabs 232 of the electrode assembly 23 according to the embodiments of the present application may be located on the same end surface or different end surfaces of the electrode assembly 23. For example, the electrode assembly 23 may include two tabs 232, and the two tabs 232 may be located on the same end surface, or the two tabs 232 may be disposed on different end surfaces. For example, the two tabs 232 may be located on end surfaces disposed opposite to each other. The embodiments of the present application are not limited thereto. For ease of description, as shown in FIGs. 3 to 5, the embodiments of the present application are mainly described by taking an example where the electrode assembly 23 includes two tabs 232 and the two tabs 232 are both disposed on the same end surface of the electrode assembly 23.

In some embodiments, the shell 21 of the battery cell 20 according to the embodiments of the present application may be further provided with an electrode terminal 214 thereon. The electrode terminal 214 is configured to be electrically connected to the electrode assembly 23 to output the electric energy of the battery cell 20. As shown in FIGs. 3 to 5, the battery cell 20 may include at least two electrode terminals 214. The at least two electrode terminals 214 include at least one positive electrode terminal and at least one negative electrode terminal. Each electrode terminal 214 is configured to be electrically connected to a corresponding tab 232. For example, each electrode terminal 214 may be electrically connected to a corresponding tab 232 via a connecting member. For example, the positive electrode tab of the electrode assembly 23 may be connected to the positive electrode terminal via one connecting member, and the negative electrode tab of the electrode assembly 23 may be connected to the negative electrode terminal via another connecting member.

The at least two electrode terminals 214 of the battery cell 20 may be disposed on the same wall or different walls of the battery cell 20. For example, the position of the electrode terminal 214 may be configured based on the position of the tab 232 of the electrode assembly 23. For example, as shown in FIGs. 3 to 5, the embodiments of the present application are mainly described by taking an example where the battery cell 20 includes two electrode terminals 214 and the two electrode terminals 214 are disposed on two opposite walls of the shell 21 of the battery cell 20.

It should be understood that the shape of the battery cell 20 according to the embodiments of the present application may be flexibly configured based on practical applications. That is, the battery cell 20 may be of any polyhedral structure, for example, may be configured as a rectangular parallelepiped, a cylinder, or the like. Specifically, the shell 21 of the battery cell 20 may include a plurality of walls to enable the battery cell 20 to be of a polyhedral structure, where the first wall 201 is any one of the walls of the shell 21. Illustratively, the shell 21 may be a rectangular parallelepiped or an approximate rectangular parallelepiped. The shell 21 may include six walls, and each wall is rectangular or approximately rectangular. For another example, the shape of the exterior of the battery cell 20 may be the same as or different from the shape of the electrode assembly 23. For example, if the electrode assembly 23 is of a cylindrical structure, the shell 21 of the battery cell 20 may also be of a cylindrical structure or a rectangular parallelepiped structure. If the electrode assembly 23 is of a rectangular parallelepiped structure, the shell 21 may typically also be of a rectangular parallelepiped structure. However, the embodiments of the present application are not limited thereto.

For ease of description, as shown in FIGs. 3 to 5, the embodiments of the present application are mainly described by taking an example where the shell 21 is of an approximately rectangular parallelepiped structure. The shell 21 may include six walls. One or more of the six walls may be approximately rectangular. For example, the contour of the wall is generally rectangular, but partial regions thereof are recessed or raised. However, the embodiments of the present application are not limited thereto.

Specifically, for a rectangular battery cell 20, for ease of description, three reference directions are defined in the embodiments of the present application. The thickness direction of the battery cell 20 is direction Y, the height direction of the battery cell 20 is direction Z, and the length direction of the battery cell 20 is direction X. The thickness direction Y, the height direction Z, and the length direction X of the battery cell 20 are perpendicular to each other, and the dimension of the battery cell 20 in the thickness direction Y is less than the dimension thereof in the length direction X.

In the embodiments of the present application, the battery cell 20 may further include a shell body 211 and a cover plate 212. For example, the shell 21 may include a shell body 211 and a cover plate 212. Specifically, the shell body 211 is of a hollow structure with an opening 2111, and the electrode assembly 23 is accommodated in the shell body 211. The cover plate 212 is configured to cover the opening 2111 of the shell body 211 to isolate the external environment.

In some embodiments, the shell body 211 may be of a hollow structure with at least one end formed with an opening 2111; the shape of the cover plate 212 may be adapted to the shape of the shell body 211, and the cover plate 212 is configured to cover the opening 2111 of the shell body 211, such that the shell 21 isolates the internal environment of the battery cell 20 from the external environment. If the shell body 211 is of a hollow structure with an opening 2111 formed at one end, one cover plate 212 may be provided, as shown in FIGs. 3 to 5. Alternatively, in contrast to the above configuration, if the shell body 211 is of a hollow structure with openings 2111 formed at each of two opposite ends, two cover plates 212 may be provided, and the two cover plates 212 cover the openings 2111 at the two ends of the shell body 211, respectively. The embodiments of the present application are not limited thereto.

The shell body 211 according to the embodiments of the present application may be made of various materials, such as copper, iron, aluminum, steel, and aluminum alloy. The cover plate 212 may also be made of various materials, such as copper, iron, aluminum, steel, and aluminum alloy. The material of the cover plate 212 may be the same as or different from the material of the shell body 211.

The shapes of the shell body 211 and the cover plate 212 according to the embodiments of the present application fit each other. For example, as shown in FIGs. 3 to 5, the shell body 211 may be of an approximately rectangular parallelepiped structure, and the cover plate 212 is of an approximately rectangular plate-shaped structure adapted to the shell body 211. The cover plate 212 may be any one of the walls of the shell 21. For example, the cover plate 212 may be a wall with the largest area or a wall with the smallest area among the plurality of walls included in the shell 21, or may be other walls. The embodiments of the present application are not limited thereto. Alternatively, the cover plate 212 may also be of other structures. For example, the cover plate 212 may also be of a groove structure with an opening, such that the opening of the cover plate 212 covers the opening 2111 of the shell body 211. The embodiments of the present application are not limited thereto.

In some embodiments, the cover plate 212 includes the wall with the largest area of the battery cell; that is, the end surface where the opening 2111 of the shell body 211 is located corresponds to the wall with the largest area of the battery cell 20, so as to facilitate the entry of the electrode assembly 23 into the shell body 211 via the opening 2111 of the shell body 211, thereby increasing the mounting speed of the battery cell 20.

In some embodiments, the first wall 201 may be any one of the walls of the shell body 211 or the cover plate 212. For example, the first wall 201 is a side wall of the shell body 211; that is, the first wall 201 may be a wall adjacent to the opening 2111. The pressure relief mechanism 213 is disposed on the first wall 201, which facilitates processing and can improve the processing efficiency of the battery cell 20.

For ease of description, the present application is mainly described by taking an example where the shell 21 is an approximate rectangular parallelepiped shown in FIGs. 3 to 5. In addition, the shell body 211 is of a hollow structure with one end open, and the first wall 201 is a side wall of the shell body 211. Correspondingly, the cover plate 212 is configured to cover the opening 2111 of the shell body 211. For example, the sealing connection between the shell body 211 and the cover plate 212 may be achieved by welding to form an enclosed chamber for placement of the electrode assembly 23, thereby improving the sealing reliability.

In some embodiments, the insulating member 22 is configured to cover a plurality of walls of the battery cell 20; that is, the insulating member 22 wraps around the outer surfaces of the plurality of walls of the battery cell 20, so as to improve the reliability of the battery cell 20 and reduce the risk of insulation failure. For example, the position of the insulating member 22 may be appropriately configured based on the mounting scenarios of the battery cell 20. For another example, the insulating members 22 may be disposed on the first wall 201 of the battery cell 20 and a plurality of walls adjacent to the first wall 201. However, the embodiments of the present application are not limited thereto.

The insulating member 22 disposed on the first wall 201 according to the embodiments of the present application will be described below with reference to the drawings. FIG. 6 shows a partial schematic structural diagram of a first wall 201 according to the embodiments of the present application. For example, the first wall 201 shown in FIG. 6 may be the first wall 201 of the battery cell 20 as shown in FIGs. 3 to 5.

In the embodiments of the present application, the orthographic projection of the clearance opening 221 onto the first wall 201 completely covers the pressure relief mechanism 213; that is, the area of the clearance opening 221 is greater than or equal to the area of the pressure relief mechanism 213, such that the clearance opening 221 does not obstruct the pressure relief mechanism 213 at all, thereby reducing the impact of the insulating member 22 on the pressure relief mechanism 213, and the pressure relief mechanism 213 can be promptly actuated when thermal runaway occurs in the battery cell 20, so as to promptly discharge emissions, thereby improving the reliability of the battery cell 20.

In some embodiments, the distance by which the clearance opening 221 extends beyond the pressure relief mechanism 213 may be configured based on practical applications. For example, the minimum distance between the boundary line of the orthographic projection of the clearance opening 221 onto the first wall 201 and the pressure relief mechanism 213 is greater than or equal to 0.5 mm. In view of manufacturing tolerances during processing, the distance between the boundary line of the orthographic projection of the clearance opening 221 onto the first wall 201 and the pressure relief mechanism 213 should not be excessively small, so as to enable the clearance opening 221 not to obstruct the pressure relief mechanism 213 at all, thereby reducing hindrance of the insulating member 22 to the pressure relief mechanism 213.

It should be understood that the minimum distance between the boundary line of the orthographic projection of the clearance opening 221 onto the first wall 201 and the pressure relief mechanism 213 according to the embodiments of the present application refers to the minimum value of the distances between the boundary line of the orthographic projection of the clearance opening 221 onto the first wall 201 and different regions of the pressure relief mechanism 213 in different directions parallel to the first wall 201.

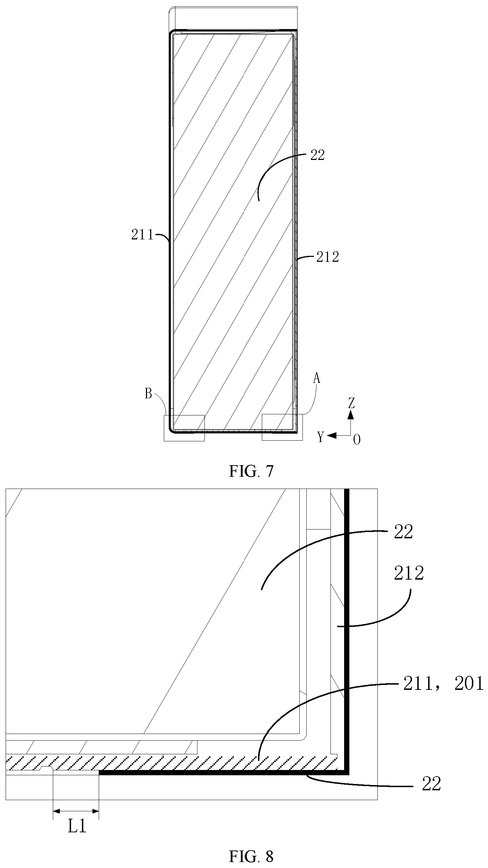

FIG. 7 shows a schematic cross-sectional view of a battery cell 20 according to the embodiments of the present application. The cross-sectional view shown in FIG. 7 may be the schematic cross-sectional view of the battery cell 20 shown in FIGs. 3 and 4, and the cross-section shown in FIG. 7 is perpendicular to the length direction X of the battery cell 20. FIG. 8 shows another partial schematic cross-sectional view of a battery cell 20 according to the embodiments of the present application. The cross-sectional view shown in FIG. 8 is a partially enlarged view of region A in the cross-sectional view shown in FIG. 7.

The shape of the pressure relief mechanism 213 according to the embodiments of the present application may be configured based on practical applications. For example, the pressure relief mechanism 213 may be rectangular, circular, or obround to facilitate processing. The shape of the clearance opening 221 according to the embodiments of the present application may also be configured based on practical applications. For example, the shape of the clearance opening 221 may be configured based on the shape of the pressure relief mechanism 213. For another example, the shape of the clearance opening 221 may be the same as or different from the shape of the pressure relief mechanism 213. The embodiments of the present application are not limited thereto. For ease of description, as shown in FIGs. 6 to 8, the embodiments of the present application are mainly described by taking an example where the pressure relief mechanism 213 and the clearance opening 221 have the same shape and are both obround.

It should be understood that in different directions parallel to the first wall 201, the distances between the boundary line of the orthographic projection of the clearance opening 221 onto the first wall 201 and the pressure relief mechanism 213 may be the same or different. That is, for different regions of the boundary line of the orthographic projection of the clearance opening 221 onto the first wall 201, the distances between the boundary line and the pressure relief mechanism 213 may be equal or different. For example, as shown in FIGs. 6 to 8, in the case where the shape of the clearance opening 221 is the same as the shape of the pressure relief mechanism 213, if the center point of the orthographic projection of the clearance opening 221 onto the first wall 201 is arranged to coincide with the center point of the pressure relief mechanism 213, the minimum distances between different points on the boundary line of the orthographic projection of the clearance opening 221 onto the first wall 201 and the pressure relief mechanism 213 are equal in different directions parallel to the first wall 201. Specifically, as shown in FIGs. 6 to 8, in the width direction Y of the battery cell 20, the distance between the boundary line of the orthographic projection of the clearance opening 221 onto the first wall 201 and the pressure relief mechanism 213 is L1; in the length direction X of the battery cell 20, the distance between the boundary line of the orthographic projection of the clearance opening 221 onto the first wall 201 and the pressure relief mechanism 213 is L2. L1 may be equal to L2, and the minimum distance between the boundary line of the orthographic projection of the clearance opening 221 onto the first wall 201 and the pressure relief mechanism 213 is L1 to facilitate processing.

It should be understood that the insulating member 22 according to the embodiments of the present application may be configured to cover any one of the walls of the battery cell 20 that require electrical insulation. For example, the insulating member 22 may be configured to cover the first wall 201. In this case, for an edge region of the first wall 201 close to other walls, to meet the design requirements for electrical insulation, typically, the insulating member 22 is typically configured to completely cover the edge region and extend beyond the edge region by a certain distance, such that the edge of the insulating member 22 is typically fixed to other walls connected to the first wall 201, thereby improving the insulating effect of the first wall 201.

In some embodiments, as shown in FIG. 8, the first wall 201 is adjacent to the cover plate 212 and is connected to the cover plate 212 at a right angle. The insulating member 22 may cover the intersection region between the first wall 201 and the cover plate 212, and may cover both the first wall 201 and the cover plate 212 to improve the insulation reliability of the battery cell 20.

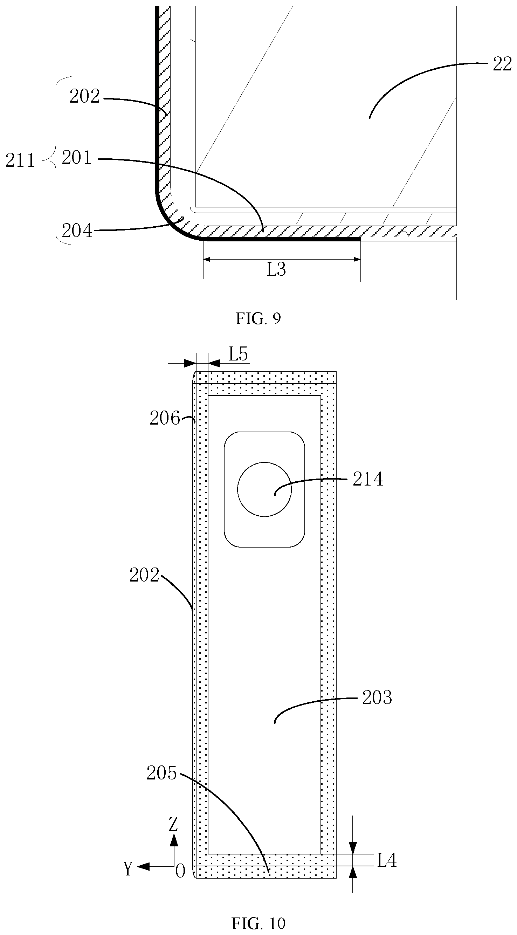

In some embodiments, if the first wall 201 is connected to other walls via a fillet, the insulating member 22 disposed on the first wall 201 typically needs to cover the fillet to reduce the risk of warping of the insulating member 22 at the fillet. For example, FIG. 9 shows another partial schematic cross-sectional view of a battery cell 20 according to the embodiments of the present application, and the cross-sectional view shown in FIG. 9 is a partially enlarged view of region B in the cross-sectional view shown in FIG. 9.

As shown in FIG. 9, the first wall 201 is connected to an adjacent second wall 202 via a first fillet 204, and the insulating member 22 covers the first fillet 204; that is, the edge of the insulating member 22 is not located in the region where the first fillet 201 is located, so as to reduce the risk of insulation failure caused by warping of the insulating member 22 at the position of the first fillet 204. The second wall 202 according to the embodiments of the present application is any one of the walls intersecting with the first wall 201. For ease of description, the embodiments of the present application are mainly described by taking an example where the second wall 202 is the bottom wall of the shell body 211; that is, the second wall 202 is the wall of the shell body 211 opposite to the opening 2111. However, the embodiments of the present application are not limited thereto.

In some embodiments, the first wall 201 is connected to the second wall 202 via a first fillet 204. If, based on the design requirements of the battery cell 20, the insulating member 22 needs to cover the first wall 201 and the second wall 202, for example, as shown in FIG. 9, the insulating member 22 covers both the first fillet 204 and the second wall 202 while covering a partial region of the first wall 201. Alternatively, unlike that shown in FIG. 9, if, based on the design requirements of the battery cell 20, the insulating member 22 needs to cover the first wall 201 but not the second wall 202, the insulating member 22 covers the first fillet 204 while covering a partial region of the first wall 201, and is terminated at a region of the second wall 202 close to the first fillet 204, such that the edge of the insulating member 22 is not located in the region of the first fillet 204 but in the region of the second wall 202.

In some embodiments, the distance by which the boundary line of the insulating member 22 extends beyond the connection line between the second wall 202 and the first fillet 204 may be configured based on practical applications. For example, the distance by which the boundary line of the insulating member 22 extends beyond the connection line between the second wall 202 and the first fillet 204 is greater than or equal to 2 mm, so as to improve the stability of the boundary line of the insulating member 22 and reduce the risk of warping of the edge of the insulating member 22, thereby reducing the risk of insulation failure. For example, as shown in FIG. 9, since the insulating member 22 covers the first wall 201, the first fillet 204, and the second wall 202, the distance by which the boundary line of the insulating member 22 extends beyond the connection line between the second wall 202 and the first fillet 204 in the embodiment shown in FIG. 9 is approximately equal to the height of the battery cell 20, that is, greater than or equal to 2 mm.

FIG. 10 shows a schematic side view of a battery cell 20 according to the embodiments of the present application. For example, FIG. 10 may be a schematic diagram of a side wall of the battery cell 20 shown in FIGs. 3 and 4. As shown in FIG. 10, the battery cell 20 according to the embodiments of the present application further includes an electrode terminal 214. The electrode terminal 214 is disposed on a third wall 203 of the battery cell 20, and the third wall 203 is different from the first wall 201. By disposing the electrode terminal 214 and the pressure relief mechanism 213 on different walls of the battery cell 20, when thermal runaway occurs in the battery cell 20, the impact of emissions discharged via the pressure relief mechanism 213 on the electrode terminal 214 can be reduced, and the risk of short circuits can be reduced, thereby reducing the risk of thermal propagation.

In the embodiments of the present application, the battery cell 20 may include a plurality of electrode terminals 214, and the plurality of electrode terminals 214 may be located on the same wall or different walls. For example, if the plurality of electrode terminals 214 of the battery cell 20 are located on the same wall, the battery cell 20 includes one third wall 203. For another example, if the plurality of electrode terminals 214 of the battery cell 20 are located on different walls, the battery cell 20 includes a plurality of third walls. For example, as shown in FIG. 10, the battery cell 20 according to the embodiments of the present application includes two electrode terminals 214. The two electrode terminals 214 are located on two opposite third walls, respectively, and the first wall 201 is located between the two third walls 203; that is, the first wall 201 is connected to the two third walls 203.

In the embodiments of the present application, the insulating member 22 is configured to cover all regions of the first wall 201 other than the pressure relief mechanism 213. Considering that the electrode terminal 214 is configured to output the electric energy of the battery cell 20, for example, a plurality of battery cells 20 may be connected to the electrode terminal 214 via a busbar component to achieve the electrical connection among the plurality of battery cells 20, therefore, the insulating member 22 typically does not cover the region where the electrode terminal 214 is located, so as to reduce the impact of the insulating member 22 on the electrode terminal 214 and improve the stability of the electrical connection between the electrode terminal 214 and other components. Therefore, in the case where the first wall 201 is not provided with the electrode terminal 214, the insulating member 22 may typically cover all regions of the first wall 201 other than the pressure relief mechanism 213 to facilitate processing.

In some embodiments, the third wall 203 according to the embodiments of the present application is also a wall connected to the first wall 201. In this case, the third wall 203 may be another implementation of the second wall 202 according to the embodiments of the present application, different from that shown in FIG. 9, to correspond to the related description of the second wall 202 above. Specifically, similar to the first fillet 204, the first wall 201 is connected to the third wall 203 via a second fillet 205, and the insulating member 22 covers the second fillet 205; that is, the edge of the insulating member 22 is not located in the region where the second fillet 205 is located, so as to reduce the risk of insulation failure caused by warping of the insulating member 22 at the position of the second fillet 205.

In the embodiments of the present application, in the case where the third wall 203 is provided with the electrode terminal 214, the insulating member 22 may be configured not to cover the entire region of the third wall 203 to facilitate processing. However, the insulating member 22 covers the first wall 201 and also covers the second fillet 205 between the first wall 201 and the third wall 203. That is, the edge of the insulating member 22 is not located in the region of the second fillet 205 but in the region of the third wall 203.

Specifically, the distance L4 by which the boundary line of the insulating member 22 extends beyond the connection line between the third wall 203 and the second fillet 205 may be configured based on practical applications. For example, the distance L4 by which the boundary line of the insulating member 22 extends beyond the connection line between the third wall 203 and the second fillet 205 is typically configured to be greater than or equal to 2 mm, so as to improve the stability of the boundary line of the insulating member 22 and reduce the risk of warping of the edge of the insulating member 22, thereby reducing the risk of insulation failure. For example, as shown in FIG. 10, taking the third wall 203 being perpendicular to the length direction X of the battery cell 20 as an example, in a region of the third wall 203 close to the second fillet 205, in the height direction Z of the battery cell 20, the distance by which the boundary line of the insulating member 22 extends beyond the connection line between the third wall 203 and the second fillet 205 is L4, and L4 may be configured to be greater than or equal to 2 mm.

Similarly, any one of the walls of the battery cell 20 that are covered with the insulating member 22 may be connected to the connected wall via a fillet. For example, a fillet may also be provided between the third wall 203 and the bottom wall of the shell body 211. Taking the bottom wall of the shell body 211 being the second wall 202 as an example, the third wall 203 may be connected to the second wall 202 via a third fillet 206. The insulating member 22 covers at least a partial region of the second wall 202 and covers the third fillet 206; that is, the edge of the insulating member 22 is not located in the region where the third fillet 206 is located, so as to reduce the risk of insulation failure caused by warping of the insulating member 22 at the position of the third fillet 206.

Specifically, the distance L5 by which the boundary line of the insulating member 22 extends beyond the connection line between the third wall 203 and the third fillet 206 may be configured based on practical applications. For example, the distance L5 by which the boundary line of the insulating member 22 extends beyond the connection line between the third wall 203 and the third fillet 206 is typically configured to be greater than or equal to 2 mm, so as to improve the stability of the boundary line of the insulating member 22 and reduce the risk of warping of the edge of the insulating member 22, thereby reducing the risk of insulation failure. For example, as shown in FIG. 10, taking the second wall 202 being perpendicular to the width direction Y of the battery cell 20 and the third wall 203 being perpendicular to the length direction X of the battery cell 20 as an example, in a region of the third wall 203 close to the third fillet 206, in the width direction Y of the battery cell 20, the distance by which the boundary line of the insulating member 22 extends beyond the connection line between the third wall 203 and the third fillet 206 is L5, and L5 may be configured to be greater than or equal to 2 mm. In addition, the distance L4 may be the same as or different from the distance L5. For example, L4 and L5 may be configured to be different to adapt to different types of battery cells 20 and reduce the processing difficulty.

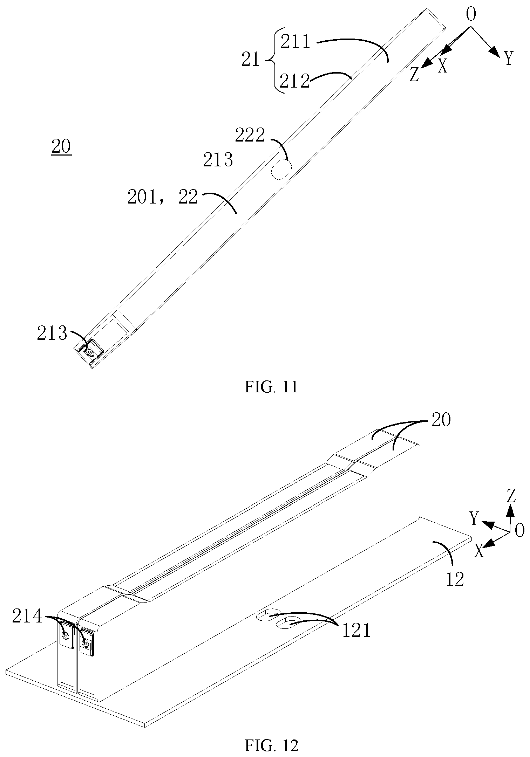

It should be understood that the above is mainly described by taking the insulating member 22 being provided with the clearance opening 221 as an example. In contrast to the above configuration, the insulating member 22 may also be configured in other manners to reduce hindrance to the pressure relief mechanism 213. FIG. 11 shows another schematic structural diagram of a battery cell 20 according to the embodiments of the present application. For example, the battery cell 20 shown in FIG. 11 may be any battery cell 20 included in the battery 10 shown in FIG. 2. As shown in FIG. 11, unlike the embodiments shown in FIGs. 3 and 4, the insulating member 22 is provided with a weakened region 222 opposite to the pressure relief mechanism 213. The weakened region 222 is configured to be destroyed when the pressure relief mechanism 213 is actuated, so as to discharge emissions within the battery cell 20 out of the battery cell 20.

In the case of normal operation of the battery cell 20, the insulating member 22 can cover the pressure relief mechanism 213 of the first wall 201 to protect the pressure relief mechanism 213 and improve the reliability of the pressure relief mechanism 213. In the case of thermal runaway of the battery cell 20, the pressure relief mechanism 213 is actuated, and the weakened region 222 can be destroyed, such that the temperature inside the battery cell 20 can be promptly reduced and the pressure inside the battery cell can be promptly relieved, thereby reducing the risk of thermal propagation and improving the reliability and stability of the battery 10.

It should be understood that the weakened region 222 according to the embodiments of the present application may be implemented in a variety of ways. In some embodiments, the weakened region 222 may be a score or a groove, such that the thickness of the weakened region 222 is less than the thickness of other regions of the insulating member 22, thereby enabling the weakened region to be destroyed when the pressure relief mechanism 213 is actuated.

In some embodiments, the weakened region 222 may further include a plurality of through holes that are not in communication with each other. For example, as shown in FIG. 11, a plurality of through holes may be formed at an edge of the insulating member 22 close to the pressure relief mechanism 213 and spaced apart at a small distance, to reduce the structural strength of the region and form the weakened region 222. In the case where the pressure relief mechanism 213 is actuated, the connection regions between the through holes have low strength and are prone to fracture, such that the weakened region 222 is prone to rupture, thereby enabling prompt reduction of the temperature inside the battery cell 20 and prompt relief of the pressure therein.

In some embodiments, as shown in FIG. 11, the spacings among the plurality of through holes that are not in communication with each other included in the weakened region 222 may be the same or different. For example, the distances among different through holes may be adjusted to configure the position where the weakened region 222 can be most rapidly destroyed, and thus the discharge direction of the emissions within the battery cell 20 can be adjusted, thereby improving the reliability of the battery cell 20. For example, the smaller the distances among the plurality of through holes are configured, the more easily the regions where the plurality of through holes are located are destroyed.

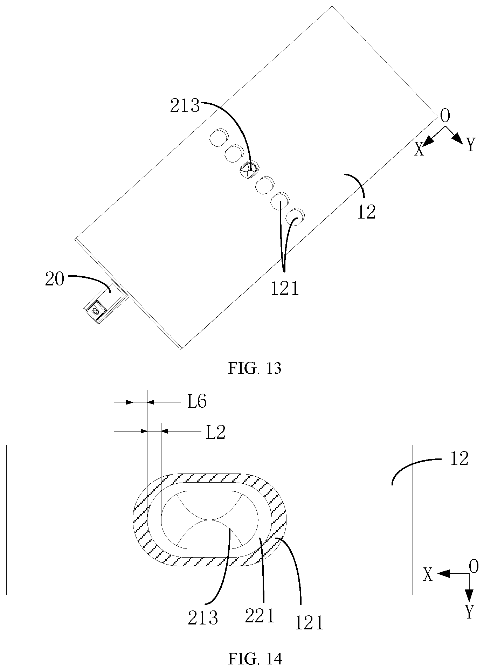

FIGs. 12 and 13 show partial schematic structural diagrams of a battery 10 from different angles according to the embodiments of the present application, respectively. For example, FIGs. 12 and 13 may be partial schematic structural diagrams of the battery 10 from different angles as shown in FIG. 2. As shown in FIGs. 12 and 13, the battery 10 includes a plurality of battery cells 20. For example, the plurality of battery cells 20 may be accommodated in the case 11 of the battery 10.

In some embodiments, the battery 10 further includes a separating component 12. The separating component 12 is attached to the first wall 201. The separating component 12 is provided with a pressure relief region 121 opposite to the pressure relief mechanism 213, and the pressure relief region 121 is configured to discharge emissions of the battery cell discharged via the pressure relief mechanism 213. Specifically, as shown in FIGs. 12 and 13, the first walls 201 of the plurality of battery cells 20 are oriented toward the separating component 12, such that the discharge directions of the pressure relief mechanisms 213 of the plurality of battery cells 20 are uniform, thereby facilitating processing and assembly. In addition, the emissions discharged via the pressure relief mechanisms 213 can be uniformly disposed and treated. The separating component 12 is provided with a pressure relief region 121, such that in the case where the battery cell 20 is actuated, the emissions discharged via the pressure relief mechanism 213 can be discharged by means of the pressure relief region 121. As a result, the impact on the pressure relief mechanism 213 can be reduced; the pressure inside the battery cell 20, where thermal runaway occurs, can be promptly relieved, and the temperature therein can be promptly reduced, thereby reducing the risk of thermal propagation.

It should be understood that the separating component 12 according to the embodiments of the present application may be any component attached to the first wall 201 in the battery 10. In some embodiments, the battery 10 includes a case 11, the case 11 is configured to accommodate a plurality of battery cells 20, and the separating component 12 is a wall of the case 11. In this case, the emissions discharged via the pressure relief mechanism 213 will be discharged to the outside of the case 11 via the pressure relief region 121 to reduce the impact on other components in the case 11.

In some embodiments, the separating component 12 is a thermal management component, and the thermal management component is configured to regulate the temperature of the battery cell. Specifically, the separating component 12 may be configured to accommodate a fluid to regulate the temperature of the battery cell 20. In the case of lowering the temperature of the battery cell 20, the separating component 12 may accommodate a cooling medium to regulate the temperature of the battery cell 20. In this case, the separating component 12 may also be referred to as a cooling component, a cooling system, a cooling plate, or the like. In addition, the separating component 12 may also be configured for heating, which is not limited in the embodiments of the present application. Optionally, the fluid in the separating component 12 may flow circularly to achieve a better temperature regulation effect.

It should be understood that the pressure relief region 121 of the separating component 12 according to the embodiments of the present application may be implemented in a variety of ways. For example, as shown in FIGs. 12 and 13, the pressure relief region 121 is a through hole. That is, the pressure relief region 121 is a through hole extending through the separating component 12, and the extension direction is the thickness direction Z of the separating component 12. In one aspect, the through hole is easy to process, and in another aspect, the emissions discharged via the pressure relief mechanism 213 can be released promptly and rapidly.

In some embodiments, the pressure relief region 121 may also be a weakened region of the separating component 12, and the weakened region can be destroyed when the pressure relief mechanism 213 is actuated, so as to discharge the emissions promptly. When the pressure relief mechanism 213 is actuated, the weakened region can be destroyed, such that the emissions from the battery cell 20 provided with the pressure relief mechanism 213 pass through the weakened region and are discharged. In addition, by configuring the pressure relief region 121 as the weakened region, when the pressure relief mechanism 213 is not actuated, for example, during the process of normal operation of the battery 10, the separating component 12 can be in a sealed state, thereby effectively protecting the pressure relief mechanism 213 from failure caused by external force. Furthermore, when thermal runaway occurs in the battery cell 20, the pressure relief mechanism can be destroyed promptly so as to discharge the emissions, thereby reducing the risk of thermal runaway and improving the safety of the battery 10.

It should be understood that in the case where the pressure relief region 121 according to the embodiments of the present application is a weakened region region, the weakened region may be implemented in a variety of ways. For example, the weakened region may be configured to be made of a specific material, such that the melting point of the weakened region is low, thereby allowing the weakened region to be melted when the pressure relief mechanism 213 is actuated. For example, the melting point of the material of the weakened region is appropriately selected, such that the weakened region has sufficient strength during the process of normal operation of the battery cell 20 to maintain relative sealing performance of the region where the battery cell 20 is located and protect the pressure relief mechanism 213 from external environments. In another aspect, when thermal runaway occurs in the battery cell 20, the weakened region can be destroyed promptly, for example, melted promptly, such that the emissions of the battery cell 20 can pass through the destroyed pressure relief region 121 promptly and be discharged, thereby reducing the risk of thermal runaway and improving the safety of the battery 10.

In some embodiments, the weakened region according to the embodiments of the present application may also be configured in other ways that are convenient for destruction by emissions, which is not limited in the embodiments of the present application. For example, the thickness of the weakened region is configured to be less than the thickness of other regions of the separating component 12 other than the weakened region to reduce the strength of the separating component, such that the emissions can rapidly destroy the weakened region by melting and rupturing, thereby discharging the emissions promptly. For example, the separating component 12 is provided with a groove corresponding to the pressure relief mechanism 213 and having an opening facing the pressure relief mechanism 213, and the weakened region is the bottom wall of the groove. In this way, the opening of the groove corresponds to the pressure relief mechanism 213, and the interior of the groove can provide a deformation space for the pressure relief mechanism 213. In addition, by configuring the bottom wall as the weakened region, the processing is facilitated.

It should be understood that the shape of the pressure relief region 121 according to the embodiments of the present application may be configured based on practical applications. For example, the shape of the pressure relief region 121 may be determined based on the shape of the pressure relief mechanism 213 or the clearance opening 221 of the insulating member 22. For example, the shape of the pressure relief region 121 may be the same as the shape of the pressure relief mechanism 213 to facilitate processing. However, the embodiments of the present application are not limited thereto.

It should be understood that the dimension of the pressure relief region 121 according to the embodiments of the present application may be configured based on practical applications. For example, the dimension of the pressure relief region 121 may be configured based on the dimension of the pressure relief mechanism 213 or the clearance opening 221 of the insulating member 22.

In some embodiments, the orthographic projection of the clearance opening 221 onto the separating component 12 is located within the pressure relief region 121; that is, the area of the pressure relief region 121 is greater than the area of the clearance opening 221. FIG. 14 shows a schematic side view of a side of the separating component 12 away from a battery cell 20 according to the embodiments of the present application. As shown in FIG. 14, an example where the pressure relief mechanism 213, the clearance opening 221, and the pressure relief region 121 have the same shape is used here. In a direction parallel to the first wall 201, the dimension of the pressure relief mechanism 213 is typically less than the dimension of the clearance opening 221, so as to reduce the impact of the clearance opening 221 on the pressure relief mechanism 213. In addition, the dimension of the clearance opening 221 may also be configured to be less than the dimension of the pressure relief region 121, so as to reduce the risk of insulation failure of the pressure relief region 121, thereby improving the reliability of the battery cell 20.

In some embodiments, the distance by which the pressure relief region 121 extends beyond the clearance opening 221 may be configured based on practical applications. Specifically, in different directions parallel to the separating component 12, the minimum distances between different points on the boundary line of the orthographic projection of the clearance opening 221 onto the separating component 12 and the boundary line of the pressure relief region 121 may be the same or different. For example, as shown in FIG. 14, in the case where the shape of the clearance opening 221 is the same as the shape of the pressure relief region 121, if the center point of the orthographic projection of the clearance opening 221 onto the separating component 12 is arranged to coincide with the center point of the pressure relief region 121, the minimum distances between different points on the boundary line of the orthographic projection of the clearance opening 221 onto the separating component 12 and the boundary line of the pressure relief region 121 are the same in different directions parallel to the separating component 12. For example, the minimum distances may all be equal to L6, and the value of the distance L6 may be set based on practical applications.

According to some embodiments of the present application, the present application further provides a battery 10. The battery includes the battery cell 20 according to any one of the above solutions.

According to some embodiments of the present application, the present application further provides an electric device. The electric device includes the battery according to any one of the above solutions, and the battery is configured to provide electric energy for the electric device.

The electric device may be any one of the aforementioned devices or systems that use the battery.

According to some embodiments of the present application, referring to FIGs. 3 to 10, the present application provides a battery cell 20. The battery cell 20 includes: a first wall 201, the first wall 201 being provided with a pressure relief mechanism 213; and an insulating member 22, the insulating member 22 being configured to cover a partial region of the first wall 201, the insulating member 22 being provided with a clearance opening 221, and the clearance opening 221 being configured to provide clearance for the pressure relief mechanism 213. The orthographic projection of the clearance opening 221 onto the first wall 201 completely covers the pressure relief mechanism 213. The first wall 201 is connected to an adjacent second wall 202 via a first fillet 204, and the insulating member 22 covers the first fillet 204. The battery cell 20 further includes an electrode terminal 214. The electrode terminal 214 is disposed on a third wall 203 of the battery cell 20, and the third wall 203 is different from the first wall 201. The insulating member 22 is configured to cover all regions of the first wall 201 other than the pressure relief mechanism 213. The battery cell 20 further includes: a shell body 211, the shell body 211 being of a hollow structure with an opening 2111, and the first wall 201 being a side wall of the shell body 211; and a cover plate 212, the cover plate 212 being configured to cover the opening 2111 of the shell body 211, and the cover plate 212 being the wall with the largest area of the battery cell 20.

The present application further provides a battery 10. The battery 10 includes a plurality of battery cells 20. The battery 10 further includes a separating component 12. The separating component 12 is attached to the first wall 201. The separating component 12 is provided with a pressure relief region 121 opposite to the pressure relief mechanism 213, and the pressure relief region 121 is configured to discharge emissions of the battery cell discharged via the pressure relief mechanism 213. The orthographic projection of the clearance opening 221 onto the separating component 12 is located within the pressure relief region 121. The pressure relief region 121 is a through hole. The separating component 12 is a thermal management component, and the thermal management component is configured to regulate the temperature of the battery cell 20. Alternatively, the battery 10 includes a case 11, the case 11 is configured to accommodate a plurality of battery cells 20, and the separating component 12 is a wall of the case 11.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell, comprising:
a first wall (201), the first wall (201) being provided with a pressure relief mechanism (213); and
an insulating member (22), the insulating member (22) being configured to cover a partial region of the first wall (201), the insulating member (22) being provided with a clearance opening (221), and the clearance opening (221) being configured to provide clearance for the pressure relief mechanism (213).

2. The battery cell according to claim 1, wherein the insulating member (22) is configured to cover a plurality of walls of the battery cell.

3. The battery cell according to claim 1 or 2, wherein an orthographic projection of the clearance opening (221) onto the first wall (201) completely covers the pressure relief mechanism (213).

4. The battery cell according to claim 3, wherein a minimum distance between a boundary line of the orthographic projection of the clearance opening (221) onto the first wall (201) and the pressure relief mechanism (213) is greater than or equal to 0.5 mm.

5. The battery cell according to any one of claims 1 to 4, wherein the first wall (201) is connected to an adjacent second wall (202) via a first fillet (204), and the insulating member (22) covers the first fillet (204).

6. The battery cell according to claim 5, wherein a distance by which a boundary line of the insulating member (22) extends beyond a connection line between the second wall (202) and the first fillet (204) is greater than or equal to 2 mm.

7. The battery cell according to any one of claims 1 to 6, wherein the battery cell further comprises:
an electrode terminal (214), the electrode terminal (214) being disposed on a third wall (203) of the battery cell, and the third wall (203) being different from the first wall (201).

8. The battery cell according to claim 7, wherein the insulating member (22) is configured to cover all regions of the first wall (201) other than the pressure relief mechanism (213).

9. The battery cell according to claim 7 or 8, wherein the battery cell comprises:
a shell body (211), the shell body (211) being of a hollow structure with an opening (2111), and the first wall (201) being a side wall of the shell body (211); and
a cover plate (212), the cover plate (212) being configured to cover the opening (2111) of the shell body (211), and the cover plate (212) being a wall with a largest area of the battery cell.

10. A battery, comprising:
a plurality of battery cells, wherein the battery cell is the battery cell according to any one of claims 1 to 9.

11. The battery according to claim 10, wherein the battery further comprises:
a separating component (12), the separating component (12) being attached to the first wall (201), the separating component (12) being provided with a pressure relief region (121) opposite to the pressure relief mechanism (213), and the pressure relief region (121) being configured to discharge emissions of the battery cell discharged via the pressure relief mechanism (213).

12. The battery according to claim 11, wherein an orthographic projection of the clearance opening (221) onto the separating component (12) is located within the pressure relief region (121).

13. The battery according to claim 11 or 12, wherein the pressure relief region (121) is a through hole.

14. The battery according to any one of claims 11 to 13, wherein the separating component (12) is a thermal management component, and the thermal management component is configured to regulate a temperature of the battery cell; or
the battery comprises a case (11), the case (11) is configured to accommodate a plurality of battery cells, and the separating component (12) is a wall of the case (11).

15. An electric device, comprising:
a battery, wherein the battery is the battery according to any one of claims 10 to 14, and the battery is configured to supply power to the electric device.
